# EUROPÄISCHE PATENTSCHRIFT

(11) **EP 0 842 697 B1**
(45) Veröffentlichungstag und Bekanntmachung des Hinweises auf die Patenterteilung: **06.02.2002**
(21) Anmeldenummer: 97119145.7
(22) Anmeldetag: 03.11.1997
(51) Int. Cl.: B01J 20/18

(54) **Bindemittelfreie Molekularsiebzeolithgranulate die Zeolithe vom Typ Lithium-Zeolith A und Lithium-Zeolith X enthalten**
Binder free molecular sieve zeolite granulates containing lithium zeolite A and lithium zeolite X
Granulés sans liant de tamis moléculaires à base de zéolithes contenant des zéolithes de type zéolithe A au lithium et zéolithe X au lithium

(30) Priorität: 15.11.1996 DE 19647290
(43) Veröffentlichungstag der Anmeldung: 20.05.1998
(73) Patentinhaber: UOP LLC, Des Plaines, IL 60017 (US)
(72) Erfinder: Hees, Bruno, 40764 Langenfeld (DE); Puppe, Lothar, Dr., 51399 Burscheid (DE); Reiss, Gerhard, 51375 Leverkusen (DE)
(74) Vertreter: Weber, Dieter, Dr.

(56) Entgegenhaltungen:
- EP-A- 0 170 026
- EP-A- 0 785 020
- DE-A- 3 401 485
- DE-B- 1 203 238
- US-A- 5 174 979

## Beschreibung

Die vorliegende Erfindung betrifft bindemittelfreie Molekularsiebzeolithgranulate die Zeolithe vom Typ Lithium-Zeolith A und Lithium-Zeolith X enthalten, ein Verfahren zur Herstellung dieser Molekularsiebzeolithgranulate sowie deren Verwendung bei der Herstellung von Stickstoff oder Sauerstoff aus Luft durch Druckwechseladsorption.

Die Erzeugung von Sauerstoff aus Luft bei Umgebungstemperaturen (z.B. -30°C bis +50°C) wird industriell in großem Umfang mit Molekularsieb-Zeolithen durchgeführt. Hierbei wird die bevorzugte Adsorption von Stickstoff gegenüber Sauerstoff ausgenutzt, d.h., Sauerstoff und Argon aus der Luft werden beim Durchströmen der Luft durch eine Zeolithschüttung am Austritt der Schüttung als Produkt aufgefangen. Die Desorption des adsorbierten Stickstoffs kann dann z.B. durch Evakuierung der Schüttung erfolgen. Für diesen Fall bezeichnet man den Prozeß als Vakuum-Swing-Adsorption (VSA), im Gegensatz zur ebenfalls bekannten Pressure-Swing-Adsorption (PSA), wobei der Stickstoff bei etwa Umgebungsdruck desorbiert wird. Ein kontinuierlicher VSA-Prozeß ist durch folgende Verfahrensschritte gekennzeichnet:
a) Durchleiten von Luft durch eine Zeolithschüttung (z.B. beim Umgebungsdruck) und Entnahme von O₂-reichem Gas an der Austrittzone;
b) Evakuieren der Schüttung mit einer Vakuumpumpe auf einen Unterdruck beispielsweise von etwa 100 bis 400 mbar im Gegenstrom zu der Luftströmung;
c) Befüllen der Schüttung mit O₂-reichem Gas im Gegenstrom zur Luftströmung oder mit Luft im Gleichstrom zur Luftströmung auf Adsorptionsdruck oder nahezu auf Adsorptionsdruck.

Ziel der verschiedenen Prozesse ist stets eine hohe Produktrate - bezogen auf eingesetzte Menge Zeolithkombination - und eine hohe O₂-Ausbeute (Verhältnis der O₂-Menge im Produkt zur O₂-Menge in der eingesetzten Luftmenge). Eine hohe O₂-Ausbeute schließt einen niedrigen Energiebedarf (bezogen auf produzierte O₂-Menge) der Vakuumpumpe bzw. des Luftkompressors ein.

Bedingt durch die drei obengenannten Schritte hat man meist drei Zeolithschüttungen, d.h., drei Adsorber, die zyklisch betrieben werden.

Die Wirtschaftlichkeit derartiger Adsorptionsanlagen wird durch die Investition, wie z.B. Adsorptionsmittelmenge und Vakuumpumpengröße, und insbesondere durch die Betriebskosten, wie z.B. Stromverbrauch der Vakuumpumpe und/oder des Luftkompressors, beeinflußt. Es wurden deshalb Zeolithe entwickelt, mit denen es möglich ist, hohe Stickstoffadsorptionen im Bereich zwischen Adsorptionsdruck und minimalem Desorptionsdruck zu erreichen, so daß die eingesetzte Zeolithmenge klein gehalten werden bzw. sogar reduziert werden konnte. Wie in EP-A 374 631 beschrieben wurden dazu Ca-Zeolithe A eingesetzt. Weitere Entwicklungen auf diesem Gebiet zielten auf die Erhöhung der Selektivität des Stickstoffs gegenüber dem Sauerstoff ab.

Eine höhere Selektivität erreicht man durch den Einsatz von Lithium-Zeolith X (EP-A 297 542). Man erhält einen höheren Separationsfaktor (N₂-Beladung zu O₂-Beladung) sowie eine höhere N₂-Beladung gegenüber dem Na-Zeolith X.

Im US-Patent 5 174 979 werden mit Tonmineralien gebundene Granulate beschrieben, deren Zeolithanteil aus Li-Zeolith A oder Li-Zeolith X besteht, wobei das Li₂O/Al₂O₃-Verhältnis des Li-Zeolith A-Granulats zwischen 10 und 70 % und das Li₂O/Al₂O₃-Verhältnis des Li-Zeolith X-Granulats zwischen 50 und 95 % liegt und der restliche Kationenanteil aus Kalzium- oder Strontiumionen besteht. Bei einem Luftdruck von 1 bar (abs.) hat das reine Lithium-Zeolith A-Granulat nur eine N₂-Adsorption von etwa 0,35 mmol/Gramm; und die N₂-Adsorption beträgt am Li-Zeolith X-Granulat bei 0,8 bar (abs.) etwa 1,1 mmol/Gramm. Das Granulat bestehend aus Lithium-Zeolith A kann demnach verbessert werden, indem zusätzlich Kalzium- oder Strontiumionen eingetauscht wird.

In EP-A 0 548 755 wird gezeigt, daß im Falle von Lithium-Zeolith X durch den Eintausch von Kalzium- und Strontiumionen die N₂-Adsorption und N₂/O₂-Selektivität nicht wesentlich gegenüber einem vollständig ausgetauschten Lithium-Zeolith X abfällt, solange der Na₂O-Anteil im Zeolithgitter niedrig bleibt. Gemäß Figur 5 dieser Druckschrift hat ein vollständig mit Lithium ausgetauschter Zeolith X eine nur um ca. 34 % höhere "Stickstoff-Arbeits-Kapazität" gegenüber einem vollständig mit Kalzium-Ionen ausgetauschten Zeolith X. Gemäß Figur 7 dieser Druckschrift ist die N₂/O₂-Selektivität des Ca-Zeoliths sogar um 10 % (relativ) besser gegenüber dem Lithium-Zeolith X.

In EP-A 297 542 wird zur Herstellung des Lithium-Zeolith X-Granulats Na-Zeolith X-Pulver mit Ton gebunden, danach kalziniert, wieder befeuchtet, dann mit einer LiCl-Lösung ausgetauscht, mit LiOH gewaschen und danach mit einem heißen Gasstrom aktiviert, d.h. wasserfrei gemacht.

Aus DE-A 1 203 238 sind Granulate bekannt, die aus Na-Zeolith A bestehen, dessen SiO₂-Binder durch einen Nachbehandlungsschritt, eine sogenannte Aluminierung, in Zeolith A umgewandelt wird. Als Bindemittel bezeichnet man inaktive Bestandteile des Granulats, die das Zeolithpulver zu einem Granulat (Kugel oder Strangform) binden. Die N2- und O₂-Beladung an dem inaktiven Binder ist minimal.

In DE-A 3 401 4 85 ist die Herstellung SiO₂-gebundener Zeolith A- und Zeolith X-Granulate beschrieben.

Gemäß EP-A 0 170 026, insbesondere Beispiel 2 sind bruchfeste Granulate bekannt, die aus Ca-Zeolith A und einem SiO₂-Binder bestehen und gemäß EP-A 0 374 631 vorteilhaft zur Sauerstoffanreicherung von Luft eingesetzt werden.

Aus DE-A 1 203 238, insbesondere Beispiel 7 sind Granulate bekannt, die aus Na-Zeolith X bestehen, dessen SiO₂-Binder durch einen Nachbehandlungsschritt in Zeolith A umgewandelt wurde. Nachteilig bei den Zeolithgranulaten, die aus Na-Zeolith X und/oder Na-Zeolith A und einem SiO₂-Binder bestehen, ist die geringe Bruchfestigkeit dieser Granulate, wobei dies unabhängig von der Form der Granulate (Kugel oder Stäbchen) ist.

Die Behandlung des SiO₂-Binders des Zeolith A- oder Zeolith X-Granulats mit Lösungen der Salze von Erdalkalimetallkationen erhöht die Bruchfestigkeit des Granulats. Die Umwandlung des inaktiven SiO₂-Binders in aktiven Na-Zeolith A soll zusätzlich die Adsorptionsfähigkeit der Gesamtgranalie erhöhen. Die Erhöhung der Bruchfestigkeit eines Granulats aus Natrium-Zeolith A oder Natrium-Zeolith X und einem SiO₂-Binder durch Behandlung mit einer Lösung eines Lithiumsalzes ist nicht möglich.

Aus DD 0 154 690 ist ein Verfahren zur Abtrennung von Sauerstoff aus Gasen bekannt, wobei bindemittelfreie Molekularsieb-Zeolithgranulate des Typs NaLi-Zeolith A eingesetzt werden (siehe Seite 4, Tabelle 1 und Seite 5, Beispiel 1). In Jzv. Akad. Nauk SSSR, Ser. Khim. 1966(10) (CA66:70743f) wird der lonenaustausch eines Natrium-Zeolithen zu Li-Zeolith A sowie die Röntgenstruktur und NMR-Daten von entsprechenden Preßlingen beschrieben.

Aufgabe war es, ein bindemittelfreies, trotzdem bruchfestes Li-Zeolithgranulat zur Verfügung zu stellen, das auf technisch einfache Weise herzustellen ist, das für die Lufttrennung im Druckwechseladsorptionsprozeß eingesetzt werden kann und das hohe Ausbeuten für Sauerstoff und hohe Produktleistungen gewährleistet.

Diese Aufgabe wird durch Molekularsiebzeolithgranulate gelöst, die frei von Bindemitteln sind und wobei die Zeolithe 10 bis 85 Gew.-% vom Typ Li-Zeolith A und 15 bis 90 Gew.-% vom Typ Li-Zeolith X enthalten und Li-Zeolith A durch die Umsetzung eines SiO₂-haltigen Bindemittels erhalten wurde.

Besonders bevorzugt weist der Li-Zeolith A einen Li-Austauschgrad von 60 bis 100%, bezogen auf austauschbare Kationen, und der Li-Zeolith X einen Li-Austauschgrad von 60 bis 100%, bezogen auf austauschbare Kationen, auf.

Der Li-Zeolith A enthält vorzugsweise bis zu 20 Mol-% zweiwertige Kationen,und der Li-Zeolith X enthält vorzugsweise bis zu 20 Mol-% zweiwertige Kationen.

Ein weiterer Gegenstand der Erfindung ist ein Verfahren zur Herstellung der erfindungsgemäßen Molekularsiebzeolithgranulate, welches dadurch gekennzeichnet ist, daß pulverförmige Zeolithe vom Typ Na-Zeolith A und Na-Zeolith X mit Kieselsol oder anderen geeigneten SiO₂-haltigen Bindemitteln gemischt und zu SiO₂-gebundenen Granulaten verformt werden, die so erhaltenen Granulate einer Aluminierung unterworfen werden, wobei das SiO₂-Bindemittel in Na-Zeolith A umgewandelt wird, an den so behandelten Granulaten ein Li-Austausch durchgeführt wird, wobei 60 bis 100% der austauschbaren Kationen im Zeolith ausgetauscht werden, und anschließend das ausgetauschte Granulat einer thermischen Behandlung bei Temperaturen von 300 bis 650°C unterzogen wird, um Wasser zu entfernen (sogenannte Aktivierung).

Bevorzugt erfolgt zusätzlich vor oder nach dem Li-Austausch ein Austausch mit zweiwertigen Kationen der Reihe Magnesium, Kalzium, Barium, Strontium, Zink, Eisen, Kobalt oder Nickel.

Bevorzugte SiO₂-haltige Bindemittel sind z.B. Wassergläser, Kieselsole, Kieselgele, Aerosile oder Kieselsäurefüllstoffe. Besonders geeignet sind Kieselsole.

Die im erfindungsgemäßen Verfahren durchgeführte sogenannte Aluminierung wird folgendermaßen durchgeführt:

Das aus der Granulierung stammende Granulat wird in feuchtem Zustand bei erhöhter Temperatur mehrere Stunden mit einer wäßrigen Natriumaluminatlösung in Kontakt gebracht. Die Aluminatkonzentration wird möglichst hoch gewählt (vorzugsweise 0,5 bis 2,0 mol Al₂O₃ pro Liter), um das Volumen der Behandlungslösung niedrig zu halten. Die Menge an Aluminatlösung wird so bemessen, daß auf 1 mol SiO₂-Bindemittel mindestens 0,5 mol Al₂O₃ kommen. Mehr als 0,5 mol Al₂O₃ schaden nicht. Die Alkalilaugekonzentration in der Aluminatlösung (Behandlungslösung) kann zwischen 1,5 und 10 mol Alkalihydroxid pro Liter variieren.

Bevorzugt wird die Aluminierung (siehe auch DE-A 1 203 238, Beispiel 7) so durchgeführt, daß in einer ersten Stufe innerhalb von 0,5 bis 15 Stunden bei einer Temperatur von 25°C bis 60°C das Granulat mit der Aluminatlösung behandelt wird. Anschließend wird die Behandlung in einer zweiten Stufe bei Temperaturen zwischen 70 und 90°C für 2 bis 6 Stunden fortgesetzt. Die genauen Behandlungszeiten sind hauptsächlich abhängig vom Druchmesser der Granulate. Je kleiner der Durchmesser der Granulate desto kürzer die Behandlungszeiten (Verweilzeiten). Nach dieser Behandlung liegt das amorphe SiO₂-Bindemittel vollständig als Na-Zeolith A (kristalline Zeolithphase) vor. Nach einer gegebenenfalls sich anschließenden Waschung der Granalien können diese direkt dem Ionenaustausch unterzogen werden.

Die Aktivierung wird vorzugsweise folgendermaßen durchgeführt:

Es erfolgt eine thermische Behandlung des Granulates bei Temperaturen zwischen 300 und 650°C, die bevorzugt mit trockenen Gasen wie z.B. Luft oder Stickstoff durchgeführt wird.

Die erfindungsgemäßen Zeolithgranulate können für die Lufttrennung im Druckwechseladsorptionsprozeß eingesetzt werden.

Die Erfindung soll anhand der nachfolgenden Beispiele näher erläutert werden.

### Beispiele

Alle Granulatproben hatten eine Korngröße zwischen 1 und 2,5 mm und wurden am Ende ihrer Herstellung mit einem heißen Stickstoffstrom von 600°C auf einen Wassergehalt unter 0,5 Gew.-% aktiviert. Die Aktivierung wurde folgendermaßen durchgeführt: Durch eine Schüttung bestehend aus dem Zeolithgranulat wurde der heiße Stickstoffstrom mit einer Raumgeschwindigkeit von 10 Nm³N₂/h/10 dm³ Zeolith durchgeleitet, bis die Austrittstemperatur etwa 90 % des Wertes der Eintrittstemperatur erreichte. Danach wurde die Aktivierzeit um 20 % verlängert. Dann wurde der heiße Zeolith abgefüllt. Gebräuchliche Aktiviertemperaturen liegen bei 300 bis 650°C. Die Raumgeschwindigkeit kann ohne nennenswerte Änderung der Zeolithqualität in weiten Grenzen variiert werden. Anstelle von Stickstoff kann auch Umgebungsluft verwendet werden. Trockenes Gas reduziert generell den Restwassergehalt. Neben festen Schüttungen sind auch Drehrohre zur Aktivierung gebräuchlich, in denen das Granulat kontinuierlich unter Spülung mit einem heißen Gasstrom behandelt wird.

### Probe A (Ca-Zeolith X mit SiO₂-Binder)

Ein Zeolith X-Granulat wurde analog EP-A 0 170 026, Beispiel 2, hergestellt. Ausgangsmaterial war ein Granulat mit etwa 82 % Na-Zeolith X und 18 % SiO₂ als Binder, wobei durch Behandlung mit Kalziumchloridlösung ein Ca-Austausch erfolgte. Das CaO/Al₂O₃-Verhältnis betrug etwa 0,75. Das SiO₂/Al₂O₃-Verhältnis des eingesetzten Zeolith X Pulvers betrug etwa 2,3. Das Schüttgewicht des aktiven Granulats betrug 590 g/l.

### Probe B (Ca-Zeolith X ohne SiO₂-Binder)

Ein Zeolith X-Granulat wurde gemäß DE-A 20 16 838, Beispiel 2, hergestellt. Ausgangsmaterial war ein Granulat mit etwa 82 % Na-Zeolith X und 18 % SiO₂ als Binder, wobei durch Aluminatbehandlung der SiO₂-Anteil in Na-Zeolith A um gewandelt wurde und anschließend durch Behandlung mit Kalziumchloridlösung ein Ca-Austausch erfolgte. Das CaO/Al₂O₃-Verhältnis des Granulats betrug etwa 0,75. Das SiO₂/Al₂O₃-Verhältnis des eingesetzten Zeolith X-Pulvers betrug etwa 2,3. Das Schüttgewicht des aktiven Granulats betrug 680 g/l.

### Probe C (Li-Zeolith X mit SiO₂-Binder)

Ein Zeolith A-Granulat wurde analog EP-A 0 170 026, Beispiel 2, hergestellt. Ausgangsmaterial war ein Granulat mit etwa 82 % Na-Zeolith A und 18 % SiO₂ als Binder, wobei durch Behandlung mit Lithiumchloridlösung ein Li-Austausch erfolgte. Hierbei pumpte man 60 Liter 1-molare Lithiumchloridlösung pro Liter Granulat durch die Granulatschüttung. Die Temperatur betrug 85°C. Nach Beenden des Ionenaustausches wurde das Granulat mit Wasser gewaschen, das mit LiOH auf einen pH-Wert von 9 eingestellt worden war. Der Austauschgrad (Li₂O/Al₂O₃) des Zeolithen lag nach dem Ionenaustausch bei 98 %. Das Schüttgewicht des aktiven Granulats betrug 600 g/l

### Probe D (Mischung Li-Zeolith X und Li-Zeolith A mit SiO₂-Binder)

Ein Zeolith X-Granulat wurde gemäß DE-A 20 16 838, Beispiel 4d, hergestellt. Ausgangsmaterial war ein Granulat, bestehend aus einer Mischung von etwa 65 *%* Na-Zeolith X und 17 % Na-Zeolith A und 18 % SiO₂ als Binder, d.h. einem Zeolithanteil von 80 % X und 20 % A, wobei durch Behandlung mit Lithiumchloridlösung ein Li-Austausch erfolgte. Hierbei pumpte man 70 Liter 1-molare Lithiumchloridlösung pro Liter Granulat durch die Granulatschüttung. Die Temperatur betrug 85°C. Nach Beenden des Ionenaustausches wurde das Granulat mit Wasser gewaschen, das mit LiOH auf einen pH-Wert von 9 eingestellt worden war. Der Austauschgrad (Li₂O/Al₂O₃) des Zeolithen lag nach dem Ionenaustausch bei 98 %. Das SiO₂/Al₂O₃-Verhältnis des eingesetzten Zeolith X-Pulvers betrug etwa 2,3. Das Schüttgewicht des aktiven Granulats betrug 605 g/l.

### Probe E (Mischung Li-Zeolith X und Li-Zeolith A ohne SiO₂-Binder)

Ein Zeolith X-Granulat wurde gemäß DE-A 20 16 838, Beispiel 4d, hergestellt. Ausgangsmaterial war ein Granulat, bestehend aus einer Mischung von etwa 65 % Na-Zeolith X und 17 % Na-Zeolith A und 18 % SiO₂ als Binder, wobei durch Aluminatbehandlung des SiO₂-Anteil in Na-Zeolith A umgewandelt wurde und anschließend nach einem Waschvorgang durch Behandlung mit Lithiumchloridlösung ein Li-Austausch erfolgte. Hierbei pumpte man 70 Liter 1-molare Lithiumchloridlösung pro Liter Granulat durch die Granulatschüttung. Die Temperatur betrug 85°C. Nach Beenden des Ionenaustausches wurde das Granulat mit Wasser gewaschen, das mit LiOH auf einen pH-Wert von 9 eingestellt worden war. Der Austauschgrad (Li₂O/Al₂O₃) des Zeolithen lag nach dem Ionenaustausch bei 98 %. Das SiO₂/Al₂O₃-Verhältnis des eingesetzten Zeolith X-Pulvers betrug etwa 2,3. Das Schüttgewicht des aktiven Granulats betrug 660 g/l.

### Probe F (Mischung Li-Zeolith X und Li-Zeolith A ohne SiO₂-Binder)

Ein Zeolith X-Granulat wurde gemäß DE-A 20 16 838, Beispiel 2, hergestellt. Ausgangsmaterial war ein Granulat, bestehend aus einer Mischung von etwa 82 % Na-Zeolith X und 18 % SiO₂ als Binder, wobei durch Aluminiumbehandlung der SiO₂ -Anteil in Na-Zeolith A umgewandelt wurde und anschließend nach einem Waschvorgang durch Behandlung mit Lithiumchloridlösung ein Li-Austausch erfolgte. Hierbei pumpte man 70 Liter 1-molare Lithiumchloridlösung pro Liter Granulat durch die Granulatschüttung. Die Temperatur betrug 85°C. Nach Beenden des Ionenaustausches wurde das Granulat mit Wasser gewaschen, das mit LiOH auf einen pH-Wert von 9 eingestellt worden war. Der Austauschgrad (Li₂O/Al₂O₃) des Zeolithen lag nach dem Ionenaustausch bei 98 %. Das SiO₂/Al₂O₃-Verhältnis des eingesetzten Zeolith X-Pulvers betrug etwa 2,3. Das Schüttgewicht des aktiven Granulats betrug 650 g/l.

### Probe G (Li-Ca-Zeolith X ohne SiO₂-Binder)

Ein Zeolith X-Granulat wurde gemäß DE-A 20 16 838, Beispiel 2, hergestellt. Ausgangsmaterial war ein Granulat mit etwa 82 % Na-Zeolith X und 18 % SiO₂ als Binder, wobei durch Aluminatbehandlung der SiO₂-Anteil in Na-Zeolith A umgewandelt wurde, und danach durch Behandlung mit Lithiumchloridlösung ein Li-Austausch erfolgte. Hierbei pumpte man 60 Liter 1-molare Lithiumchloridlösung pro Liter Granulat durch die Granulatschüttung. Die Temperatur betrug 85°C. Nach Beenden des Ionenaustausches wurde das Granulat mit Wasser gewaschen, das mit LiOH auf einen pH-Wert von 9 eingestellt worden war. Der Austauschgrad (Li₂O/Al₂O₃) des Zeolithen lag nach dem Ionenaustausch bei 98 %.

Danach wurde durch Behandlung mit einer Calziumchloridlösung ein Ca-Austausch so durchgeführt, daß ein CaO/Al₂O₃-Verhältnis von 0,15 sich einstellte.

Das SiO₂/Al₂O₃-Verhältnis des eingesetzten Zeolith X-Pulvers betrug etwa 2,3. Das Schüttgewicht des aktiven Granulats betrug 680 g/l.

Zur Beurteilung der Proben wurden folgende Eigenschaften der aktivierten Proben gemessen: Bruchhärte, Stickstoff und Sauerstoffadsorption bei 1bar (abs.) und 25°C sowie in einem Druckwechseladsorptionsprozeß die Lufttrennung bezüglich der Sauerstoffgewinnung.

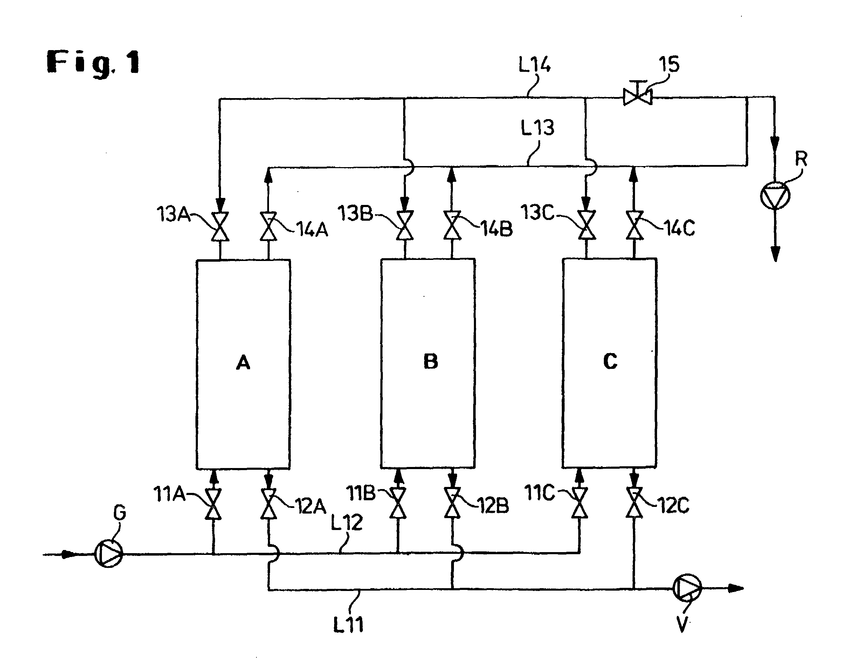

Dieser Druckwechselprozeß soll anhand der Figur 1 näher erläutert werden:

Die Anlage besteht aus folgenden Teilen:
- G=: Luftgebläse
- V=: Ölgetriebene Vakuumpumpe
- R=: Produktkompressor

A/B/C = Adsorber bestehend aus Metallsäulen mit einem Innendurchmesser von 56 mm und einer inneren Höhe von 2 000 mm; gefüllt mit Zeolithgranulat; diese Säulen sind mit einem Wassermantel umgeben und stets auf +25°C temperiert.
11A-14C = Magnetventile
15 = manuelles Regelventil
L11-L14 = Zuführungsleitungen.

### Prozeßbeschreibung:

### Zeitraum 0 bis 60 Sekunden

Trockene Luft strömt über Gebläse G durch Leitung L12 bei Umgebungsdruck von 1,03 bar (abs.) in mit Zeolithgranulat gefüllten Adsorber A. O₂-Produktgas verläßt Adsorber A über Ventil 14A und gelangt über Leitung L13 zum Produktgebläse R. Mit dem Produktgebläse R wird über ein nicht eingezeichnete Drossel der Produktstrom geregelt.

Gleichzeitig wird Adsorber C über Ventil 12C und Leitung L11 innerhalb der 60 Sekunden von Atmosphärendruck auf 200 mbar evakuiert. Der Enddruck wird über eine nicht eingezeichnete Drossel vor der Vakuumpumpe eingestellt.

Gleichzeitig wird Adsorber B über Ventil 13B und Leitung L14 und Handventil 15 innerhalb der 60 Sekunden von 200 mbar auf Atmosphärendruck mit Produktgas befüllt.

Alle nicht erwähnten Ventile sind geschlossen.

### Zeitraum 60 bis 120 Sekunden

Durch Adsorber B strömt die Luft. Adsorber C wird mit Produkt gefüllt. Adsorber A wird evakuiert.

### Zeitraum 120 bis 180 Sekunden

Durch Adsorber C strömt die Luft. Adsorber A wird mit Produkt gefüllt. Adsorber B wird evakuiert.

Ermittelt wurde die Produktmenge hinter dem Kompressor R bei 90 % und die abgepumpte Gasmenge.

Daraus können folgende Kenndaten errechnet werden. Die produzierte 02-Menge im Produkt pro Adsorptionszyklus von 60 Sekunden und die O₂-Ausbeute (= O₂-Menge im Produkt bezogen auf die O₂-Menge in der eingesetzten Luft). Diese O₂-Ausbeute ist in Druckwechseladsorptionsprozessen in direktes Maß für den Energiebedarf zur Erzeugung des Sauerstoffs.

Es wurden folgende Werte ermittelt:

**Tabelle 1**

| | | Adsorptionsisotherme | | Druckwechseladsorptionsversuch | |
|---|---|---|---|---|---|
| | Bruchhärte [kg] | N₂-Adsorption [Nl/kg] | O₂-Adsorption [Nl/kg] | O₂-Menge [Nl/kg] | O₂-Ausbeute [%] |
| Probe A (Ca-Zeolith X+A mit SiO₂-Binder), Vergleich | 2,6 | 14 | 4,8 | 0,7 | 46,2 |
| Probe B (Ca-Zeolith X+A ohne SiO₂-Binder), Vergleich | 3,5 | 14,5 | 4,7 | 0,85 | 48 |
| Probe C (Li-Zeolith X mit SiO₂-Binder), Vergleich | 1,2 | 18 | 3,85 | 1,3 | 57 |
| Probe D (Li-Zeolith 80% X + 20% A mit SiO₂-Binder), Vergleich | 1,2 | 17,2 | 3,8 | 1,25 | 56 |
| Probe E (Li-Zeolith 65% X + 35% A ohne SiO₂-Binder), erfindungsgemäß | 3,1 | 20 | 4,35 | 1,4 | 58,25 |
| Probe F (Li-Zeolith 80% X + 20% A ohne SiO₂-Binder), erfindungsgemäß | 3,1 | 22 | 4,7 | 1,55 | 59 |
| Probe G (Li-Ca-Zeolith X+A ohne SiO₂-Binder), erfindungsgemäß | 4,2 | 24 | 4,98 | 1,65 | 60,5 |

### Vergleich der Proben A und B

Der Aluminierungsschritt hat im Falle des Ca-X+A-Zeolithgranulats einen positiven Einfluß auf die O₂-Produktrate und keinen nennenswerten Einfluß auf die O₂-Ausbeute.

### Vergleich der Probe F mit Probe C

Der Aluminierungsschritt hat im Falle des Li-Zeoliths X eine Verbesserung der O₂-Ausbeute und der O₂-Produktrate erbracht.

### Vergleich der Probe F mit Probe D

Bei gleichem Zeolith X zu Zeolith A-Verhältnis hat sich durch den Aluminierungsschritt die O₂-Ausbeute und die O₂-Produktrate deutlich verbessert

### Vergleich der Probe G mit Probe F

Die Zugabe von Ca-Ionen im Li-Zeolith (X + A) hat die O₂-Produktrate und Ausbeute nochmals erhöht.

## Patentansprüche

1. Molekularsiebzeolithgranulate, die frei von Bindemitteln sind, **dadurch gekennzeichnet, daß** diese Zeolithe 10-85 Gew.-% vom Typ Li-Zeolith A und 15-90 Gew.-% vom Typ Li-Zeolith X enthalten und Li-Zeolith A durch die Umsetzung eines SiO₂-haltigen Bindemittels erhalten wurde.

2. Molekularsiebzeolithgranulate gemäß Anspruch 1, **dadurch gekennzeichnet, daß** der Li-Zeolith A einen Li-Austauschgrad von 60 bis 100%, bezogen auf austauschbare Kationen, und der Li-Zeolith X einen Li-Austauschgrad von 60 bis 100%, bezogen auf austauschbare Kationen aufweist.

3. Molekularsiebzeolithgranulate gemäß Anspruch 2, **dadurch gekennzeichnet, daß** der Li-Zeolith A bis zu 20 Mol-% zweiwertige Kationen und der Li-Zeolith X bis zu 20 Mol-% zweiwertige Kationen enthält.

4. Molekularsiebzeolithgranulate gemäß Anspruch 3, **dadurch gekennzeichnet, daß** sie zweiwertige Kationen der Reihe Magnesium, Kalzium, Barium, Strontium, Zink, Eisen, Kobalt oder Nickel enthalten.

5. Verfahren zur Herstellung der Molekularsiebzeolithgranulate gemäß Anspruch 2, **dadurch gekennzeichnet, daß** pulverförmige Zeolithe vom Typ Na-Zeolith A und Na-Zeolith X mit Kieselsol oder anderen geeigneten SiO₂-haltigen Bindemitteln gemischt und zu SiO₂-gebundenen Granulaten verformt werden, die so erhaltenen Granulate einer Aluminierung unterworfen werden, wobei das SiO₂-Bindemittel in Na-Zeolith A umgewandelt wird, an den so behandelten Granulaten ein Li-Austausch durchgeführt wird, wobei 60 bis 100% der austauschbaren Kationen im Zeolith ausgetauscht werden, und anschließend das ausgetauschte Granulat bei 300 bis 650°C aktiviert wird.

6. Verfahren gemäß Anspruch 5, **dadurch gekennzeichnet, daß** vor oder nach dem Li-Austausch ein Austausch mit zweiwertigen Kationen erfolgt.

7. Verwendung der Granulate gemäß Anspruch 1 bis 4 zur Herstellung von Stickstoff oder Sauerstoff aus Luft durch Druckwechseladsorption.

## Claims

1. Molecular sieve zeolite granules which are free from binder **characterized in that** such zeolites contain 10-85 wt.-% of Li zeolite A and 15-90 wt.-% of Li zeolite X, wherein Li zeolite A was obtained by the conversion of a SiO₂-containing binder.

2. Molecular sieve zeolite granules according to claim 1, **characterized in that** the Li zeolite A has a degree of Li exchange of 60 to 100%, with reference to exchangeable kations, and the Li zeolite X has a degree of Li exchange of 60 to 100% with reference to exchangeable kations.

3. Molecular sieve zeolite granules according to claim 2, **characterized in that** the Li zeolite A contains up to 20 mol-% of divalent kations and the Li zeolite X contains up to 20 mol-% of divalent kations.

4. Molecular sieve zeolite granules according to claim 3, **characterized in that** they contain divalent kations selected from the group consisting of magnesium, calcium, barium, strontium, zinc, iron, cobalt or nickel.

5. A process for preparing the molecular sieve zeolite granules according to claim 2, **characterized in that** powdered Na zeolite A and Na zeolite X are mixed with silica sol or other suitable SiO₂-containing binders and molded to give SiO₂-bonded granules, the so obtained granules are aluminized, wherein the SiO₂-binder is converted into Na zeolite A, a Li exchange is performed with the molecular sieve granules, wherein 60 to 100% of the exchangeable kations in the zeolite are exchanged and then the exchanged granules are activated at a temperature of 300 to 650°C.

6. Process according to claim 5, **characterized in that** before or after the Li exchange an exchange with divalent kations is conducted.

7. The use of the granules according to claims 1 to 4 for the preparation of nitrogen or oxygen from air by pressure changing adsorption.

## Revendications

1. Granulés de zéolite à effet de tamis moléculaire, exempts de liants, **caractérisés en ce que** ces zéolites contiennent de 10 à 85 % en poids du type zéolite A au lithium et de 15 à 90 % en poids du type zéolite X au lithium, la zéolite A au lithium ayant été obtenue par la conversion d'un liant contenant du SiO₂.

2. Granulés de zéolite à effet de tamis moléculaire selon la revendication 1, **caractérisés en ce que** la zéolite A au lithium présente un degré d'échange du lithium de 60 à 100 % par rapport aux cations échangeables, et la zéolite X au lithium présente un degré d'échange du lithium de 60 à 100 % par rapport aux cations échangeables.

3. Granulés de zéolite à effet de tamis moléculaire selon la revendication 2, **caractérisés en ce que** la zéolite A au lithium contient jusqu'à 20 % en moles de cations divalents, et la zéolite X au lithium contient jusqu'à 20 % en moles de cations divalents.

4. Granulés de zéolite à effet de tamis moléculaire selon la revendication 3, **caractérisés en ce qu'**ils contiennent des cations divalents choisis dans l'ensemble comprenant le magnésium, le calcium, le baryum, le strontium, le zinc, le fer, le cobalt et le nickel.

5. Procédé de fabrication des granulés de zéolite à effet de tamis moléculaire selon la revendication 2, **caractérisé en ce qu'**on mélange des zéolites en poudre du type zéolite A au sodium et zéolite X au sodium à un sol de silice ou à d'autres liants appropriés contenant du SiO₂, et on les transforme en des granulés liés au SiO₂, on soumet les granulés ainsi obtenus à une alumination, ce qui provoque une conversion du liant au SiO₂ en la zéolite A au sodium, on procède sur les granulés ainsi traités à un échange du lithium, ce à l'occasion de quoi 60 à 100 % des cations échangeables de la zéolite sont échangés, puis on active le granulat échangé à une température de 300 à 650°C. de 300 à 650°C.

6. Procédé selon la revendication 5, **caractérisé en ce qu'**on procède, avant ou après l'échange du lithium, à un échange avec des cations divalents.

7. Utilisation des granulés selon les revendications 1 à 4 pour préparer de l'azote ou de l'oxygène à partir de l'air, par adsorption par alternance de pression.
